# EUROPEAN PATENT APPLICATION

(11) **EP 2 752 977 A2**
(43) Date of publication of application: **09.07.2014**
(21) Application number: 14150306.0
(22) Date of filing: 07.01.2014
(51) Int. Cl.: H02K 9/10

(54) **Cooling system for an electric machine and method of assembly of same**

(30) Priority: 08.01.2013 US 201313736391
(71) Applicant: General Electric Company, Schenectady, New York 12345 (US)
(72) Inventor: Mahajan, Sachin Vitthal, 500072 Hyderabad (IN)
(74) Representative: Illingworth-Law, William Illingworth

(57) **Abstract**

A cooling system for rotating machines, such as electric motors, is provided. A heat exchanger housing 42 is coupled with the housing of an electric motor. At least one Peltier effect device 70 is coupled to an outer wall of the heat exchanger housing. At least one outflow air passage 56 and at least one return air passage 58 are defined within the heat exchanger housing 42 to extend between the motor housing and the outer wall of the heat exchanger housing. The at least one outflow air passage 56 transports heated air to the outer wall to facilitate heat transfer from the air to the outer wall. The at least one Peltier effect device 70 facilitates heat transfer from the outer wall.

## Description

### BACKGROUND OF THE INVENTION

The present disclosure relates generally to cooling systems for use with machines and more particularly, to methods of assembly for same.

Machines, such as electric motors, generate heat during operation as a result of both electrical and mechanical losses. Typically, an electric motor must be cooled to ensure efficient and continued operation of the motor. Excessively high motor temperatures may result in motor bearing failure and/or damage to the stator and/or to the rotor, in addition to a general loss of efficiency of the motor.

Motors are designed based on many considerations. For example, rotor temperature is a limiting factor in motor design as the rotor can generate a disproportionally high amount heat. At least some known electric motors include an enclosure including a frame and endshields. Electric motor enclosures are typically either "open" (cage-like) or totally enclosed. In an open enclosure, ambient air circulates within the enclosure, and heat is removed via convection between the air and higher temperature motor components operating within the enclosure. The heated air is subsequently exhausted from the enclosure. However, the locations in which open enclosure-type motors can be used are generally limited.

In contrast, totally enclosed electric motors are often used in applications in which the entry of airborne contaminants, such as dirt, oil, or mist, into the enclosure must be prevented. Forced convection cooling within a totally-enclosed motor enclosure is typically provided by a fan coupled to the rotor shaft, external to the enclosure. However, an external, shaft-mounted fan provides only limited heat dissipation with respect to the opposite end of the motor. Consequently, components within the enclosure, such as drive end bearings, can still overheat due to inefficient cooling. Shaft-mounted fans also provide only limited heat dissipation with respect to the rotor. In addition, coupling a fan to the rotor shaft increases the overall footprint of the motor assembly and creates drag on the motor that consumes a portion of the power of the motor.

Known motor cooling systems typically use air-to-air or air-to-liquid heat exchangers. However, air-to-air heat exchangers may produce objectionable noise, and air-to-liquid heat exchangers are often complex and require more enhanced maintenance requirements, as compared to air-to-air heat exchangers. Moreover, both air-to-air and air-to-liquid heat exchangers require large housings whose dimensions are often larger than those of the motors to which they are coupled. Accordingly, it would be desirable to provide a cooling system for machines, such as electric motors, that provides enhanced and more efficient cooling of a machine, and that has a physically smaller size as compared to known cooling systems.

### BRIEF DESCRIPTION OF THE INVENTION

In one aspect, a cooling system for a machine including a machine housing is provided. The cooling system includes a heat exchanger housing coupled to the machine housing. The heat exchanger housing includes an outer wall, the heat exchanger housing defining at least one outflow air passage therein and coupled in flow communication with an interior region defined in the machine housing. The heat exchanger housing further defines at least one return air passage coupled in flow communication with the interior region of the machine housing to enable air to be channeled from the interior region towards the outer wall for transferring heat from the air to said outer wall. The cooling system further includes at least one Peltier effect device coupled to the outer wall of the heat exchanger housing, the at least one Peltier effect device configured to facilitate heat transfer from the outer wall.

In another aspect, a method for assembling a cooling system for a machine including a machine housing is provided. The method includes coupling a heat exchanger housing to the machine housing, wherein the heat exchanger housing includes an outer wall. The method also includes coupling at least one outflow air passage defined within the heat exchanger housing in flow communication with an interior region defined in the machine housing. The method also includes coupling at least one return air passage defined within the heat exchanger housing in flow communication with the interior region of the machine housing and in flow communication with the at least one outflow air passage, to enable air to be channeled from the interior region towards the outer wall to facilitate heat transfer heat from the air to the outer wall. The method also includes coupling at least one Peltier effect device to the outer wall of the heat exchanger housing, wherein the at least one Peltier effect device facilitates heat transfer from the outer wall.

In a further aspect, a machine is provided. The machine includes a housing, and a heat exchanger housing coupled to the machine housing. The heat exchanger housing includes an outer wall, the heat exchanger housing defining at least one outflow air passage coupled in flow communication with an interior region defined in the machine housing. The heat exchanger housing further defines at least one return air passage coupled in flow communication with the machine housing interior region and in flow communication with the at least one outflow air passage to enable air to be channeled from the interior region towards the outer wall to facilitate heat transfer from the outer wall. The machine also includes at least one Peltier effect device coupled to the outer wall, the at least one Peltier effect device configured to facilitate heat transfer from the outer wall.

### BRIEF DESCRIPTION OF THE DRAWINGS

FIG. 1 is a side sectional view of an exemplary known motor cooling system.
FIG. 2 is a side sectional view of the motor cooling system illustrated in FIG. 1.
FIG. 3 is a side sectional view of an exemplary motor cooling system.

### DETAILED DESCRIPTION OF THE INVENTION

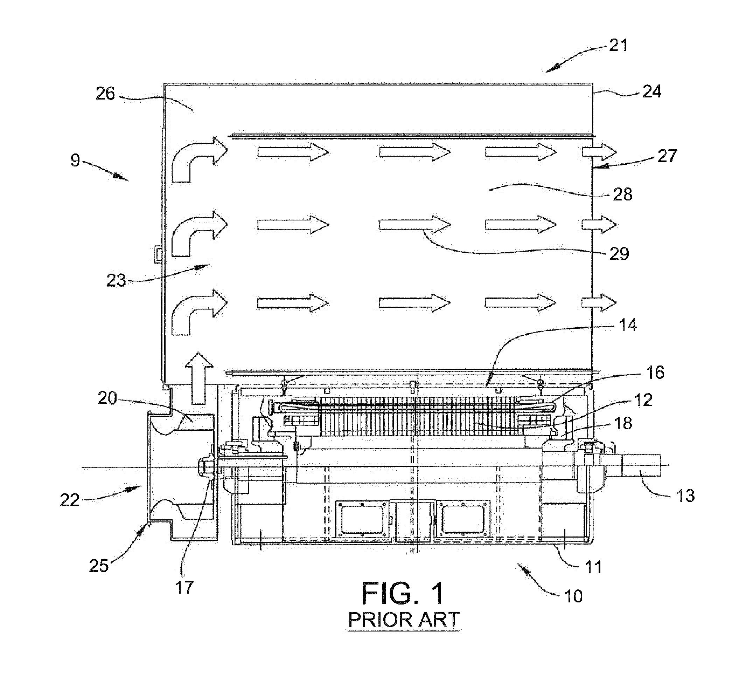

FIG. 1 is a side sectional view of an exemplary known motor 10, illustrating a motor cooling system 9. In the exemplary embodiment, motor cooling system 9 includes an air-to-air cooling circuit 21, and in particular, an ambient air flow portion 23 of air-to-air cooling circuit 21 is illustrated. Motor 10 includes a motor housing 11 that substantially completely encloses motor 10, to substantially prevent intrusion of dirt, oil or other contaminants into motor 10, as well as to substantially prevent the escape of motor lubricant from motor 10. Motor 10 includes a rotor 12 that is supported on a rotor shaft 13 that is rotatably coupled within motor housing 11. Rotor 12 is surrounded by a stator 14 including a plurality of end windings 16. A plurality of fan blades 18 are securely coupled to rotor shaft 13. An impeller 20 is securely coupled to an end 17 of rotor shaft 13, external to motor housing 11.

A heat exchanger housing 24 is mounted atop motor housing 11. Ambient air flow portion 23 of air-to-air cooling circuit 21 includes a vertical plenum 26 and one or more transverse air flow passages 28 formed in heat exchanger housing 24. Heat exchanger housing 24 substantially encloses impeller 20. An aperture 25 in heat exchanger housing 24 enables ambient air 22 to be drawn into heat exchanger housing 24, along a path illustrated by arrows 29. Specifically, during operation of motor 10, rotation of rotor shaft 13 causes rotation of impeller 20, thus drawing ambient air 22 through aperture 25, and through vertical plenum 26. Ambient air 22 travels along transverse air flow passage 28, and is eventually discharged from heat exchanger housing 24 through one or more end openings 27 defined in heat exchanger housing 24.

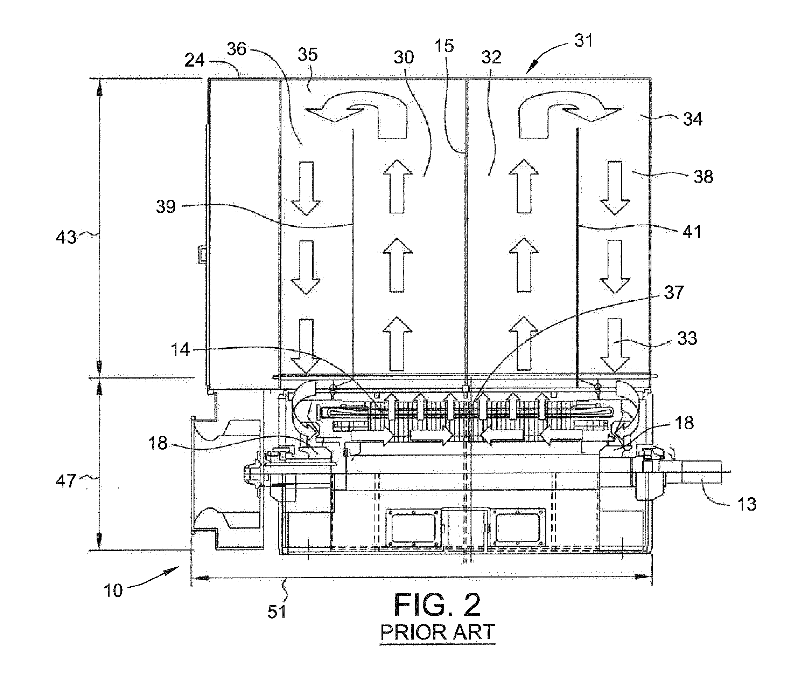

FIG. 2 is a side sectional view of motor 10 and illustrates an internal cooling air circuit 31. In the exemplary embodiment, internal cooling air circuit 31 includes a pair of outflow air passages 30 and 32 that are separated from each other by a wall 15 and by a pair of return air passages 36 and 38. Outflow air passage 30 is separated from return air passage 36 by a wall 39, and outflow air passage 32 is separated from return air passage 38 by a wall 41. Outflow air passage 30 is coupled in flow communication with return air passage 36 via a transverse air passage 35. Outflow air passage 32 is coupled in flow communication with return air passage 38 via a transverse air passage 34. Transverse air flow passage 28 (illustrated in FIG. 1) is isolated from outflow air passages 30 and 32, and from return air passages 36 and 38, via a vertical wall (not shown) in heat exchanger housing 24. Outflow air passages 30 and 32, and return air passages 36 and 38 are coupled in flow communication with motor 10 via apertures (not shown) defined in motor housing 11.

During operation of motor 10, fan blades 18 draw air 33 towards a central region 37 of motor 10, and propel air 33 through stator 14. Air 33 removes heat from rotor 12 and stator 14. Air 33 is channeled through the apertures defined in motor housing 11 into air passages 30 and 32. As air 33 rises through outflow air passages 30 and 32, and subsequently returns through return air passages 36 and 38, heat is transferred from air 33 through the vertical wall (not shown) and into ambient air 22 passing through transverse air flow passage 28 (illustrated in FIG. 1). Although only one transverse air flow passage 28, one pair of outflow air passages 30 and 32, and one pair of corresponding return air passages 36 and 38 are illustrated in FIGS. 1 and 2, in typical known motors, multiple transverse air flow passages and multiple pairs of outflow air passages and return air passages are included.

Cooling of a motor, such as motor 10, requires the creation of a temperature gradient between motor 10, specifically high temperature regions of motor 10, and its surroundings. Motor 10 relies on the use of heat exchanger housing 24 and impeller 20 to provide cooling for motor 10. In known motor-heat exchanger housing configurations, a height 43 of heat exchanger housing 24 is often as much as twice as high as a height 47 of a motor 10. The addition of impeller 20 to rotor shaft 13 further increases an overall length 51 of motor 10. Accordingly, a significant volume of space may be required by the system for cooling motor 10.

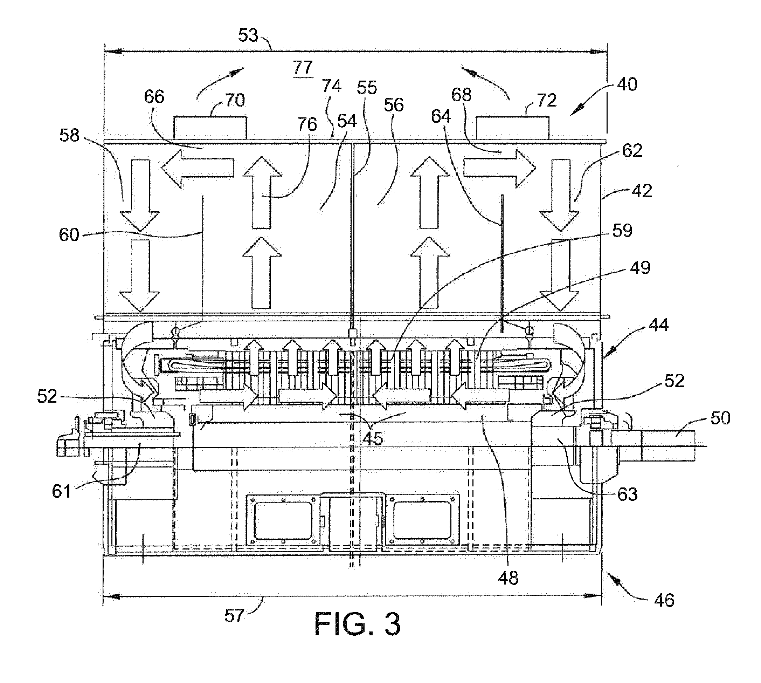

FIG. 3 is a side sectional view of an exemplary motor cooling system 40 that may be used with motor 10, for example. In the exemplary embodiment, motor cooling system 40 includes a heat exchanger housing 42 coupled to a motor housing 44 of an electric motor 46. In the exemplary embodiment, heat exchanger housing 42 has a length 53 that is approximately equal to a length 57 of motor housing 44. A rotor 48 is rotatably mounted in motor housing 44 to a rotor shaft 50. A plurality of fan blades 52 are securely coupled to opposed ends 61 and 63 of rotor shaft 50, to propel air 45 through motor housing 44 and heat exchanger housing 42 along the paths illustrated by arrows 76. A stator 49 substantially surrounds rotor 48. Heat exchanger housing 42 includes a pair of outflow air passages 54 and 56 that are separated from each other by a wall 55. Heat exchanger housing 42 also includes a return air passage 58 that is located adjacent to, and separated from, outflow air passage 54 by a wall 60. Heat exchanger housing 42 also includes a return air passage 62 that is located adjacent to, and separated from, outflow air passage 56 by a wall 64. Outflow air passage 54 communicates with return air passage 58 via an opening 66, and outflow air passage 56 communicates with return air passage 62 via an opening 68. Each passage 54 and 56, and each passage 58 and 62, is coupled in flow communication with an interior 59 of motor housing 44 through apertures (not shown) defined in motor housing 44. Although in the exemplary motor cooling system 40, only one pair of outflow air passages 54 and 56, and only one pair of return air passages 58 and 62 are illustrated, in alternative embodiments, additional outflow air passages and/or return air passages are provided.

In contrast to heat exchanger housing 24 (shown in FIGS. 1 and 2), that includes both vertically-extending passages 30, 32, 34, and 36, as well as transverse passage 28, heat exchanger housing 42 includes only substantially vertically-extending passages 54, 56, 58, and 62, thus incorporating a simpler heat exchanger housing configuration. Accordingly, heat exchanger housing 42 is simpler to construct and maintain than known air-to-air or liquid-to-air heat exchanger housing constructions.

A pair of Peltier effect devices 70 and 72 is securely coupled to an outer wall 74 of heat exchanger housing 42. Peltier effect devices 70 and 72 are of any suitable configuration as needed to enable motor cooling system 40 to function as described herein. In the exemplary motor cooling system 40, Peltier effect devices 70 and 72 are powered by an electrical power supply (not shown), are coupled to suitable control devices (not shown), and are secured to heat exchanger housing 42 in such a manner, that when powered, Peltier effect devices 70 and 72 conduct heat away from heat exchanger housing 42. Specifically, Peltier effect devices 70 and 72 channel heat conducted through outer wall 74 to an ambient atmosphere 77 through the creation of a steep temperature gradient, within each of Peltier effect devices 70 and 72, which is greater than a temperature gradient achievable through heat transfer accomplished by simple conduction and/or impeller or fan-induced convection.

When motor 46 is in operation, rotation of rotor shaft 50 causes fan blades 52 to propel air within motor 46 and heat exchanger housing 42 (as illustrated by arrows 76) along rotor 48 and through stator 49, in a manner similar to that as described herein with respect to motor 10 (shown in FIGS. 1 and 2). As heated air is propelled by fan blades 52 from motor housing 44, and through outflow air passages 54 and 56 towards outer wall 74, heat is transferred to outer wall 74. As Peltier devices 70 and 72 function as heat sinks, heat in outer wall 74 is subsequently transferred away from outer wall 74 by Peltier effect devices 70 and 72, into the ambient atmosphere. Cooled air is channeled away from outer wall 74 and returned to motor housing 44 via openings 66 and 68, and return air passages 58 and 62. In an exemplary embodiment, Peltier effect devices 70 and 72 are powered only during operation of motor 46. In an alternative embodiment, Peltier effect devices 70 and 72 remain powered for a predefined period of time after operation of motor 46 has ended, to facilitate continued cooling of motor 46. In the exemplary embodiment, the use of Peltier effect devices 70 and 72 means that the circulation of air 45 within heat exchanger housing 42 that is provided by fan blades 52 is sufficient to enable effective removal of heat from air 45, without the need for an additional impeller, such as impeller 20 (shown in FIG. 1).

Exemplary embodiments of a cooling system for a machine and method for assembling same are described above in detail. The cooling system for a machine and method for assembling same are not limited to the specific embodiments described herein, but rather, components of the cooling system and/or steps of the method can be utilized independently and separately from other components and/or steps described herein. For example, the cooling systems and methods described herein can also be used in combination with other machines and methods, and are not limited to practice with only the motor as described herein. Rather, the exemplary embodiments can be implemented and utilized in connection with many other motor and/or turbine and/or power and/or generator applications.

Although specific features of various embodiments of the invention may be shown in some drawings and not in others, this is for convenience only. In accordance with the principles of the invention, any feature of a drawing may be referenced and/or claimed in combination with any feature of any other drawing.

In contrast to known electric motor cooling systems, the cooling systems described herein facilitate increased heat dissipation from the motor, through the use of Peltier effect devices coupled to the motor housing, in combination with outflow and return air passages defined within the heat exchanger housing. In addition, the cooling systems described herein permit electric motors to be constructed with significantly reduced footprints and reduced overall package volumes and weights. The cooling systems described herein also create a steeper temperature gradient between a motor housing and the ambient surroundings, resulting in more efficient and effective cooling of an electric motor, and accordingly, improved motor efficiency. The cooling systems described herein also eliminate the need for rotor shaft-mounted impellers or fans. The cooling systems described herein also reduce maintenance requirements by enabling the use of a simplified heat exchanger housing. The cooling systems described herein also provide a reduction in overall motor noise as compared to fan-equipped air-to-air heat exchanger-provided motors. The cooling systems described herein also provide for increased bearing life due to improved cooling of the motor bearings.

This written description uses examples to disclose the invention, including the best mode, and also to enable any person skilled in the art to practice the invention, including making and using any devices or systems and performing any incorporated methods. The patentable scope of the invention is formed by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A cooling system for a machine including a machine housing, said cooling system comprising:
   a heat exchanger housing coupled to the machine housing, said heat exchanger housing comprising an outer wall, said heat exchanger housing defining at least one outflow air passage therein and coupled in flow communication with an interior region defined in the machine housing, said heat exchanger housing further defining at least one return air passage coupled in flow communication with the interior region of the machine housing to enable air to be channeled from the interior region towards said outer wall for transferring heat from the air to said outer wall; and
   at least one Peltier effect device coupled to said outer wall of said heat exchanger housing, said at least one Peltier effect device configured to facilitate heat transfer from said outer wall.
2. A cooling system in accordance with clause 1, wherein said at least one outflow air passage comprises at least two outflow air passages separated from each other by a dividing wall.
3. A cooling system in accordance with clause 1 or clause 2, wherein said at least one outflow air passage extends substantially parallel to said return air passage.
4. A cooling system in accordance with any preceding clause, wherein said at least one outflow air passage extends from the machine housing to said outer wall.
5. A cooling system in accordance with any preceding clause, wherein said at least one return air passage extends from the machine housing to said outer wall.
6. A cooling system in accordance with any preceding clause, wherein the machine includes a rotor shaft, at least one of said at least one outflow air passage and said at least one return air passage is oriented substantially perpendicular to the rotor shaft.
7. A cooling system in accordance with any preceding clause, wherein the machine housing has a first length, and said heat exchanger housing has a second length that is approximately equal to the machine housing first length.
8. A cooling system in accordance with any preceding clause, wherein said at least one outflow air passage is adjacent to said at least one return air passage.
9. A method for assembling a cooling system for a machine including a machine housing, said method comprising:
   coupling a heat exchanger housing to the machine housing, wherein the heat exchanger housing includes an outer wall;
   coupling at least one outflow air passage defined within the heat exchanger housing in flow communication with an interior region defined in the machine housing;
   coupling at least one return air passage defined within the heat exchanger housing in flow communication with the interior region of the machine housing and in flow communication with the at least one outflow air passage, to enable air to be channeled from the interior region towards the outer wall to facilitate heat transfer heat from the air to the outer wall; and
   coupling at least one Peltier effect device to the outer wall of the heat exchanger housing, wherein the at least one Peltier effect device facilitates heat transfer from the outer wall.
10. A method in accordance with any preceding clause, wherein coupling at least one outflow air passage comprises:
   coupling at least two outflow air passages within the heat exchanger housing; and
   isolating the at least two outflow air passages from each other by a dividing wall.
11. A method in accordance with any preceding clause, further comprising coupling said at least one outflow air passage parallel to said return air passage.
12. A method in accordance with any preceding clause, further comprising coupling said at least one outflow air passage to extend from the machine housing to said outer wall.
13. A method in accordance with any preceding clause, further comprising coupling said at least one return air passage to extend from the machine housing to said outer wall.
14. A method in accordance with any preceding clause, wherein the machine includes a rotor shaft, said method further comprising orienting at least one of said at least one outflow air passage and said at least one return air passage substantially perpendicular to the rotor shaft.
15. A method in accordance with any preceding clause, wherein the machine housing has a first length, said method further comprising configuring said heat exchanger housing with a second length that is approximately equal to the machine housing first length.
16. A method in accordance with any preceding clause, further comprising coupling said at least one outflow air passage adjacent to said at least one return air passage.
17. A machine comprising:
   a housing;
   a heat exchanger housing coupled to the machine housing, said heat exchanger housing comprising an outer wall, said heat exchanger housing defining at least one outflow air passage coupled in flow communication with an interior region defined in the machine housing, said heat exchanger housing further defining at least one return air passage coupled in flow communication with said machine housing interior region and in flow communication with said at least one outflow air passage to enable air to be channeled from said interior region towards said outer wall to facilitate heat transfer from said outer wall; and
   at least one Peltier effect device coupled to said outer wall, said at least one Peltier effect device configured to facilitate heat transfer from said outer wall.
18. A machine in accordance with any preceding clause, wherein said at least one outflow air passage comprises two outflow air passages separated from each other by a dividing wall.
19. A machine in accordance with any preceding clause, wherein said at least one outflow air passage extends substantially parallel to said return air passage.
20. A machine in accordance with any preceding clause, wherein said at least one outflow air passage extends from the machine housing to said outer wall.

## Claims

1. A cooling system for a machine including a machine housing, said cooling system comprising:
a heat exchanger housing (42) coupled to the machine housing, said heat exchanger housing comprising an outer wall, said heat exchanger housing defining at least one outflow air passage (56) therein and coupled in flow communication with an interior region defined in the machine housing, said heat exchanger housing further defining at least one return air passage (58) coupled in flow communication with the interior region of the machine housing to enable air to be channeled from the interior region towards said outer wall for transferring heat from the air to said outer wall; and
at least one Peltier effect device (70) coupled to said outer wall of said heat exchanger housing, said at least one Peltier effect device configured to facilitate heat transfer from said outer wall.

2. A cooling system in accordance with Claim 1, wherein said at least one outflow air passage comprises at least two outflow air passages separated from each other by a dividing wall.

3. A cooling system in accordance with Claim 1 or Claim 2, wherein said at least one outflow air passage extends substantially parallel to said return air passage.

4. A cooling system in accordance with any preceding Claim, wherein said at least one outflow air passage extends from the machine housing to said outer wall.

5. A cooling system in accordance with any preceding Claim, wherein said at least one return air passage extends from the machine housing to said outer wall.

6. A cooling system in accordance with any preceding Claim, wherein the machine includes a rotor shaft, at least one of said at least one outflow air passage and said at least one return air passage is oriented substantially perpendicular to the rotor shaft.

7. A cooling system in accordance with any preceding Claim, wherein the machine housing has a first length, and said heat exchanger housing has a second length that is approximately equal to the machine housing first length.

8. A cooling system in accordance with any preceding Claim, wherein said at least one outflow air passage is adjacent to said at least one return air passage.

9. A machine comprising:
a housing; and
a cooling system according to anyone of the preceding Claims.

10. A method for assembling a cooling system for a machine including a machine housing, said method comprising:
coupling a heat exchanger housing to the machine housing, wherein the heat exchanger housing includes an outer wall;
coupling at least one outflow air passage defined within the heat exchanger housing in flow communication with an interior region defined in the machine housing;
coupling at least one return air passage defined within the heat exchanger housing in flow communication with the interior region of the machine housing and in flow communication with the at least one outflow air passage, to enable air to be channeled from the interior region towards the outer wall to facilitate heat transfer heat from the air to the outer wall; and
coupling at least one Peltier effect device to the outer wall of the heat exchanger housing, wherein the at least one Peltier effect device facilitates heat transfer from the outer wall.

11. A method in accordance with Claim 10, wherein coupling at least one outflow air passage comprises:
coupling at least two outflow air passages within the heat exchanger housing; and
isolating the at least two outflow air passages from each other by a dividing wall.

12. A method in accordance with Claim 10 or Claim 11, further comprising coupling said at least one outflow air passage parallel to said return air passage.

13. A method in accordance with any of Claims 10 to 12, further comprising coupling said at least one outflow air passage to extend from the machine housing to said outer wall.

14. A method in accordance with any of Claims 10 to 13, further comprising coupling said at least one return air passage to extend from the machine housing to said outer wall.

15. A method in accordance with any of Claims 10 to 14, wherein the machine includes a rotor shaft, said method further comprising orienting at least one of said at least one outflow air passage and said at least one return air passage substantially perpendicular to the rotor shaft.
